Europäisches Patentamt

European Patent Office

Office européen des brevets

(11) Publication number: **0 305 161 B1**

## EUROPEAN PATENT SPECIFICATION

(45) Date of publication of patent specification: **15.07.92** (51) Int. Cl.5: **C09J 7/02, B32B 27/30, B32B 7/10, B32B 31/28**

(21) Application number: **88307835.4**

(22) Date of filing: **24.08.88**

(54) **Unified pressure-sensitive adhesive tape.**

(30) Priority: **28.08.87 US 90671**

(43) Date of publication of application:
**01.03.89 Bulletin 89/09**

(45) Publication of the grant of the patent:
**15.07.92 Bulletin 92/29**

(84) Designated Contracting States:
**BE CH DE FR GB IT LI NL SE**

(56) References cited:
**EP-A- 0 131 484**
**GB-A- 2 011 309**

(73) Proprietor: **MINNESOTA MINING AND MANU-FACTURING COMPANY**
**3M Center, P.O. Box 33427**
**St. Paul, Minnesota 55133-3427(US)**

(72) Inventor: **Zimmerman, Patrick G. c/o Minnesota Mining and**
**Manufactering Company 2501 Hudson Road**
**St. Paul Minnesota 55133-3427(US)**
Inventor: **Kuller, Douglas H. c/o Minnesota Mining and**
**Manufactering Company 2501 Hudson Road**
**St. Paul Minnesota 55133-3427(US)**

(74) Representative: **Baillie, Iain Cameron et al**
**c/o Ladas & Parry, Altheimer Eck 2**
**W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The invention concerns photopolymerizable pressure-sensitive adhesive tapes comprising a plurality of contiguous layers which cannot be delaminated. Each of the layers comprises a photopolymerized matrix of polymeric chains, and at least one of the outer layers is photopolymerized to a pressure-sensitive adhesive state. This invention also concerns a process for concurrently coating tapes incorporating such layers.

Description of the Related Art

The invention concerns photopolymerizable pressure-sensitive adhesive tapes. U.S. Patent RE No. 24,906 (Ulrich), reissued on December 20, 1960, discloses pressure-sensitive adhesive tapes, the adhesive layers of which comprise copolymers consisting essentially of monomers of acrylic acid esters of non-tertiary alkyl alcohols having from 1-14 carbon atoms, and at least one monomer copolymerizable therewith.

U.S. Patent No. 4,181,752 (Martens et al.) discloses a process for making pressure-sensitive adhesive tape which involves the photopolymerization of the alkyl esters of acrylic acid and the modifying monomers to form the acrylate copolymers. It is also disclosed that the intensity and spectral distribution of the irradiation must be controlled in order to attain desirably high peel resistance and cohesive strength. The process disclosed is preferably carried out in the absence of oxygen and air which inhibit the polymerization reaction. Thus, it is normally carried out in an inert atmosphere such as nitrogen, carbon dioxide, helium, argon, etc. Air can also be excluded by sandwiching the liquid photopolymerizable mixture between layers of solid sheet material and irradiating through the sheet material. Each layer must be coated and cured before the addition of another layer.

U.S. Patent No. 4,243,500 (Glennon) discloses a pressure-sensitive adhesive formed from a composition comprising mono-functional unsaturated acrylate ester monomer, essentially saturated tackifying resin polymer dissolved in the acrylate ester, non-crystallizing elastomeric material also dissolved in the acrylate ester and an initiator responsive to ultraviolet light or other penetrating radiation such as electron beam, gamma, or X-ray radiation. The intensity of the lamps taught by Glennon is much greater than those taught by Martens.

One embodiment of a pressure-sensitive adhesive tape is commonly called a "transfer tape" in that it typically has a low-adhesion liner from which it is transferred when used. Such a tape can also be linerless as disclosed in U.S. Patent Nos. 2,889,038 (Kalleberg) and 4,522,870 (Esmay). One embodiment of the invention, like those tapes of U.S. Patent Nos. 4,223,067 (Levens), and 4,514,615 (Esmay), has a foam-like appearance and character, even though it is not a foam.

The double-coated pressure-sensitive adhesive tape of U.S. Patent No. 2,889,038 (Kalleberg) comprises a flexible support having on opposite faces chemically different pressure-sensitive adhesive layers which are physically incompatible, thus enabling the tape to be wound directly upon itself into a roll for storage and shipment. The tape is made by successively coating and drying solutions of two different pressure-sensitive adhesives onto opposite faces of a flexible web. To test for the incompatibility of the two pressure-sensitive adhesives, a solution of one of the pressure-sensitive adhesives is coated onto an undried coating of the other, and the coatings are simultaneously dried at room temperature for 24 hours to evaporate the solvents. Physical incompatibility is demonstrated by peeling the dried layers apart.

The double-coated pressure-sensitive adhesive tape of the above-cited Esmay patent is similar to that of the Kalleberg patent except that both adhesive faces can have truly high performance, and the adhesive layers at the two faces of the flexible web do not need to be either chemically different or physically incompatible. This is achieved when the pressure-sensitive adhesive at each of the faces is a polymer of predominantly alkyl acrylate, substantially solvent-free, and crosslinked. The Esmay patent states: "It is surmised that if the adhesive were not substantially solvent-free, the solvent would allow the polymer chains to knit across adjacent convolutions during prolonged storage in roll form, such that perfect separation could no longer be assured. In the present state of the art, it would not be commercially feasible to coat a pressure-sensitive adhesive from solution and obtain a pressure-sensitive adhesive layer which is substantially solvent-free. To keep the amount of solvent to a minimum, the (Esmay) tape is preferably made using photopolymerization as in U.S. Patent No. 4,181,752 (Martens et al.)" (col. 2, lines 21-32).

The Esmay patent discloses that a "technique for enhancing immediate adhesion to relatively rough or uneven surfaces is to incorporate glass microbubbles into the pressure-sensitive adhesive as taught in U.S. Patent No. 4,223,067 (Levens)" (col. 4, lines 31-35). Because the microbubble-containing tape of the Levens patent has a foam-like appearance and character, it is sometimes called a "foam-like" tape even though its pressure-sensitive adhesive layer is substantially free of voids except for the hollow spaces within the microbubbles. The Levens patent in turn teaches that where it is desired to adhere the foam-like tape "to a surface to which its pressure-sensitive adhesive layer would not form a strong bond, it may be desirable to apply to one or both of its faces of its microbubble-filled adhesive layer a layer of unfilled pressure-sensitive adhesive which is especially selected for adhesion to that surface" (col. 4, lines 9-15). Such microbubble-free surface layers can also provide substantially increased cohesive strength, especially at high temperatures. Multiple microbubble-free surface layers can have different adhesive properties, each selected for good adhesion to a certain surface. Because the application of those added layers substantially increase the cost of the foam-like tape, less expensive foam-backed tapes have dominated the market for uses requiring immediate adhesion to rough or uneven surfaces.

The microbubbles can be glass as in the examples of the Levens patent, or they can be polymeric as described in U.S. Patent No. 3,615,472 (Morehouse et al.) or U.S. Patent No. 4,287,308 (Nakayama et al.).

U.S. Patents No. 4,710,536 and 4,749,590, (Klingen, et al.), disclose the use of certain hydrophobic silicas as fillers for photopolymerized pressure-sensitive adhesive tapes. Preferred silicas have surface areas of at least 10 $m^2/g$. It is disclosed that the presence of the filler increases the internal strength of the tape.

## Summary of the Invention

The invention relates to a pressure-sensitive adhesive tape comprising a plurality of concurrently coated superimposed layers, the layers having been simultaneously photopolymerized, at least one outer layer being a pressure-sensitive adhesive layer containing at least one alkyl acrylate ester of a nontertiary alcohol and a photoinitiator, contiguous layers defining an interface therebetween, each of the layers comprising a photopolymerized matrix of polymeric chains; the polymeric chains extending from the matrix of one of the layers through the interface into the matrix of a contiguous layer; the polymeric chains comprising polymerized monomers having migrated from the matrix of each contiguous layer prior to polymerization whereby the layers cannot be delaminated.

The novel product differs from tapes of the prior art in that the monomers of the pressure-sensitive adhesive matrix migrate across the interface prior to and during photopolymerization so that after photopolymerization the polymer chains extending through the interface comprise a substantial amount of monomers originally from both sides of the interface. This yields layers which cannot be physically delaminated.

The present invention embraces a variety of embodiments. One group of preferred embodiments of the present invention is that of pressure-sensitive adhesive tapes which are at least equal in performance to multi-layer foam-like tapes of the Levens and Esmay patents, but can be produced at significantly lower cost. A second group of preferred embodiments is that of cost-effective, double-coated, pressure-sensitive adhesive tapes. Such tapes may have identical or differing adhesives at each surface. Such tapes may further comprise one or more non-adhesive layers selected from a multitude of polymeric matrices, i.e., flexible or foam-like supports between the adhesive layers, or releasable liners.

An especially preferred embodiment of the present invention is a pressure-sensitive adhesive tape comprising thin layers heretofore not possible in photopolymerized tapes. Such tapes have layers ranging in thickness from about 2.5 micrometers (0.10 mil) to about 38 micrometers (1.5 mil) each.

As used herein, the term "tape" includes but is not limited to, those adhesive strips which are single-coated adhesive layers permanently attached to a backing or support, double-coated adhesive strips having flexible supports with an adhesive layer on both sides thereof, and adhesive strips with no support or backing, such being typically though not necessarily releasably attached to a low-adhesion liner, and commonly called "transfer tapes".

As used herein, the terms "concurrent coating" and "concurrently coated" and the like refer to any method of coating wherein the layers to be coated contact each other prior to any contact with the carrier web.

The present invention also relates to a process for making a pressure-sensitive adhesive tape comprising the steps of:

    1) preparing a plurality of coatable compositions, each of the coatable compositions comprising at least one photopolymerizable monomer; at least one of the coatable compositions being curable to a pressure-sensitive adhesive state, monomers of each of the coatable compositions being copolymerizable when blended and subjected to photopolymerization conditions;

    2) concurrently coating the coatable compositions to provide a plurality of superimposed layers with contiguous layers defining an interface therebetween, with one composition which is curable to a pressure-sensitive adhesive state being coated as a first or last layer;

    3) permitting migration of photopolymerizable monomers through the interface between contiguous layers; and

4) subjecting the superimposed layers to irradiation to simultaneously photopolymerize the monomers in each layer, and to provide polymeric chains comprised of copolymers of photopolymerizable monomers originating from contiguous layers extending through the interface therebetween thereby to produce a tape having layers which cannot be delaminated.

All parts, percentages and ratios described herein are by weight unless otherwise identified.

## Detailed Description of the Invention

Each of the layers of tapes of the invention comprises a photopolymerizable matrix comprising polymeric chains. These matrices may comprise a multitude of polymers; however, all polymers used in such matrices must be photopolymerizable, preferably by the ultraviolet portion of the spectrum (220-440 nm). At least one outer layer must be photopolymerizable to a pressure-sensitive adhesive state.

Such pressure-sensitive adhesive layer of the novel tape has a photopolymerizable matrix comprising an acrylic pressure-sensitive adhesive.

The acrylic pressure-sensitive adhesives useful in the present invention are alkyl acrylates, preferably monofunctional unsaturated acrylate esters of non-tertiary alkyl alcohols, the molecules of which have from 1 to about 14 carbon atoms. Included within this class of monomers are, for example, isooctyl acrylate, isononyl acrylate, 2-ethyl-hexyl acrylate, decyl acrylate, dodecyl acrylate, n-butyl acrylate, and hexyl acrylate. Preferred monomers include isooctyl acrylate, isononyl acrylate, and butyl acrylate. The alkyl acrylate monomers can be used to form homopolymers for the photopolymerizable polymer or they can be copolymerized with polar copolymerizable monomers. When copolymerized with strongly polar copolymerizable monomers, the alkyl acrylate monomer generally comprises at least about 75% of the photopolymerizable polymers. When copolymerized with moderately polar copolymerizable monomers, the alkyl acrylate monomer generally comprises at least about 70% of the photopolymerizable polymer.

The polar copolymerizable monomers can be selected from strongly polar copolymerizable monomers such as acrylic acid, itaconic acid, hydroxyalkyl acrylates, cyanoalkyl acrylates, acrylamides or substituted acrylamides, or from moderately polar copolymerizable monomers such as N-vinyl pyrrolidone, acrylonitrile, vinyl chloride or diallyl phthalate. The strongly polar copolymerizable monomer preferably comprises up to about 25%, more preferably up to about 15%.The moderately polar copolymerizable monomer preferably comprises up to about 30%, more preferably from 5% to about 30% of the photopolymerizable polymer.

The pressure-sensitive adhesive matrix of the novel tape of the invention also contains a photoinitiator to induce polymerization of the monomers. Photoinitiators that are useful for polymerizing the acrylate monomer include the benzoin ethers, substituted benzoin ethers such as benzoin methyl ether or benzoin isopropyl ether, substituted acetophenones such as 2,2-diethoxy-acetophenone, and 2,2-dimethoxy-2-phenyl-acetophenone, substituted alpha-ketols such as 2-methyl-2-hydroxypropiophenone, aromatic sulphonyl chlorides such as 2-naphthalene sulphonyl chloride, and photoactive oximes such as 1-phenyl-1,1-propanedione-2-(O-ethoxycarbonyl) oxime. Generally, the photoinitiator is present in an amount of from about 0.01 part to about 1.0 parts based on 100 parts monomer weight.

Where superior cohesive strengths are desired, the pressure-sensitive adhesive matrix of the novel tape should be cross-linked. Preferred crosslinking agents for an acrylic pressure-sensitive adhesive are multifunctional acrylates such as 1,6-hexanediol diacrylate as well as those disclosed in U.S. Patent No. 4,379,201 (Heilmann et al.), such as trimethylolpropane triacrylate, pentaerythritol tetracrylate, 1,2-ethylene glycol diacrylate, and 1,2-dodecanediol diacrylate. Crosslinking is especially easy to control when photopolymerizing the monomer in admixture with a multiacrylate crosslinking agent. Other useful crosslinking agents include the substituted triazines, such as those disclosed in U.S. Patent Nos. 4,329,384 and 4,330,590 (Vesley), e.g., 2,4-bis(trichloromethyl)-6-p-methoxystyrene-5-triazine and the chromophore halomethyl-5-triazines. Each of the crosslinking agents is useful in the range of from about 0.01% to about 1% of the total weight of the monomers.

Among pressure-sensitive adhesives which are useful for the pressure-sensitive adhesive layer of the novel tape are those which become tacky only at elevated temperatures, e.g., acrylic copolymers having average carbon-to-carbon chains of less than 4 carbon atoms or those comprising a polymer wherein methacrylic acid esters are substituted for portions of acrylic acid esters.

Tapes of the invention may comprise more than one pressure-sensitive adhesive layer. In such tapes, the pressure-sensitive adhesive layers may comprise similar or different adhesive compositions, in like or unlike thicknesses, having similar or different additives.

Where a foam-like pressure-sensitive adhesive tape is desirable, a monomer blend comprising microbubbles may be used as a backing or core layer. The microbubbles may be glass as taught in the Levens patent, supra, or they may be polymeric. The microbubbles should have an average diameter of 10 to 200 micrometers, and comprise from about 5 to about 65 volume percent of the pressure-sensitive adhesion layer.

Preferred glass microspheres have average diameters of about 80 micrometers. When glass microbubbles are used, the thickness of the foam-like layer should be at least six times, preferably at least twenty times that of each microbubble-free layer. The thickness of the layer should preferably exceed three times the average diameter of the microbubbles and twice the diameter of substantially every microbubble. The thickness of foam-like layers in preferred tapes of the invention range from 0.3 mm to about 4.0 mm in thickness.

Especially preferred microspheres are polymeric microspheres, such as those described in U.S. Patent Nos. 3,615,972, 4,075,238, and 4,287,308. The microspheres are available from the Pierce & Stevens Company under the trade name "Microlite" in unexpanded form and "Miralite" in expanded form. Similar microspheres are available from Kema Nord Plastics under the trade name "Expancel" and from Matsumoto Yushi Seiyaku under the trade name "Micropearl". In expanded form, the microspheres have a specific density of approximately 0.02-0.036 g/cc. It is possible to include the unexpanded microspheres in the core layer and subsequently heat them to cause expansion, but it is generally preferred to mix in the expanded microspheres. This process ensures that the hollow microspheres in the final core layer are substantially surrounded by at least a thin layer of adhesive.

When a microbubble-free pressure-sensitive adhesive tape is desired to be provided on a substantially non-tacky flexible support film, the film, or "core" layer may comprise substantially the same monomers described for the pressure-sensitive adhesive layer, with different ratios of the acrylic acid ester of non-tertiary alcohol and at least one polar copolymerizable monomer. The preferred range of the polar copolymerizable monomer in such a layer ranges from 10% to about 60% of the total monomer mix.

The core layer may also comprise a crosslinking agent and other photopolymerizable ingredients including, but not limited to alkyl vinyl ethers, vinylidene chloride, styrene, and vinyl toluene, only in amounts that do not detract from the desired properties. A preferred additional ingredient is a poly-(methylmethacrylate) polymer, (PMMA), which may be present in amounts up to 70% of the total monomer weight, preferably from 30% to about 50% of the total monomer weight.

Other materials which can be blended with the polymerizable monomer mixture include fillers, tackifiers, foaming agents, antioxidants, plasticizers, reinforcing agents, dyes, pigments, fibers, fire retardants and viscosity adjusting agents.

An especially useful filler material is hydrophobic silica as disclosed in U.S. Patents No. 4,710,536 and 4,749,590, (Klingen, et al.). In one preferred embodiment of the present invention, the pressure-sensitive adhesive layer further comprises from about 2 to about 15 phr of a hydrophobic silica having a surface area of at least 10 $m^2$/g.

Tackifiers useful in tapes of the invention include aliphatic polymeric resins which may also contain an aromatic component, and which have a number average molecular weight of from about 300 to about 2500, preferably from about 900 to about 2000, a polydispersity index of less than about 5, a glass transition temperature of about 40°C to about 120°C, and a solubility parameter of about 7 to 9.5 (cal/cc)$^{-1/2}$ The aliphatic polymeric resins or the aliphatic component of the polymeric resins containing both aliphatic and aromatic components is derived from C-5 or (C-5)$_2$ monomer fractions as described in Satas, Handbook of Pressure Sensitive Adhesive Technology, Van Nostrand Reinhold Co., New York, 1982, pp.353-369. When tackifier is present, it typically comprises from about 5 parts to about 50 parts per hundred parts resin (phr).

Especially preferred tackifiers are hydrogenated rosin ester tackifying agents. Rosin esters have a higher softening point than unmodified rosins, and higher molecular weight. Ethylene glycol, glycerol, and pentaerythritol are the most common alcohols used for esterification. Rosin esters are quite stable, and resistant to hydrolysis, and such stability increases with hydrogenation. Surprisingly, acrylic ultraviolet-radiation photopolymerized pressure-sensitive adhesives tackified with hydrogenated rosin ester tackifying agents show improved adhesion over solvent-polymerized acrylic pressure-sensitive adhesives containing about 4 to 8 times as much rosin ester tackifier.

Preferred tackifying agents are highly hydrogenated, e.g., hydrogenated glycerine esters commercially available from companies such as Hercules Inc., under such trade names as Foral™, and Pentalyn™. Individual tackifiers include Foral™ 65, Foral™ 85, and Foral™ 105. Tackifiers useful in the invention having softening temperatures of from about 65° to about 110°. Use of these tackifiers in tapes of the invention do not significantly prohibit the UV curing when used in the moderate amounts required for compositions of the invention. Many rosin and rosin ester based systems prevent or substantially inhibit ultraviolet-radiation curing when used in effective amounts, and so are not useful in tapes of the invention.

Tapes of the invention may also comprise a woven or nonwoven scrim. Presence of such a scrim will not inhibit migration of the monomers from one layer through the interface to a contiguous layer of the tape.

The present invention also relates to a process for making the pressure-sensitive adhesive tape of the invention, comprising the steps of:

1) preparing a plurality of coatable compositions, each of the coatable compositions comprising at least one photopolymerizable monomer; at least one of the coatable compositions being curable to a pressure-sensitive adhesive state, monomers of each of the coatable compositions being copolymerizable when blended and subjected to photopolymerization conditions;

2) concurrently coating the coatable compositions to provide a plurality of superimposed layers with contiguous layers defining an interface therebetween, with one composition which is curable to a pressure-sensitive adhesive state being coated as a first or last layer;

3) permitting migration of photopolymerizable monomers through the interface between contiguous layers; and

4) subjecting the superimposed layers to irradiation to simultaneously photopolymerize the monomers in each layer, and to provide polymeric chains comprised of copolymers of photopolymerizable monomers originating from contiguous layers extending through the interface therebetween, thereby to produce a tape having layers which cannot be delaminated.

Concurrently coating the coatable compositions herein provides advantages not seen with sequential coating of the compositions. When the coatable compositions containing the monomers are coated sequentially, some mechanical mixing of the layers occurs when each contiguous layer is coated. When the layers are coated concurrently, no such mechanical mixing occurs. It is theorized that migration occurs through a diffusion of the monomers into contiguous layers. Minimizing mechanical mixing means better control of the amount of monomer migration between the layers. This enables the skilled artisan to select the processing method that results in the desired amount of migration, even combining concurrently coated layers with sequentially coated layers for certain applications. Further, concurrent coating processes allow multi-layer pressure-sensitive adhesive tapes to be coated and cured in one trip, resulting in faster and more economical processing of such tapes.

It has further been discovered that pressure-sensitive tapes may be made by the process of the invention wherein the layers are extremely thin. When the layers are coated in a sequential manner, a minimum layer thickness is about 38 micrometers (1.5 mil). When attempts are made to obtain thinner layers via sequential coating, extreme processing difficulties are encountered. When contact-type sequential coating techniques, i.e., notch bar or reverse roll coating are attempted with layers of less than about 50 micrometers (2.0 mils), the precise machine control required along with the increased solution and web handling difficulties renders the processing line vulnerable to shut down if even a single speck of dirt intrudes. When non-contact type sequential coating techniques, i.e., sequential extrusion or curtain coating, are attempted, normal flow rates will not maintain the fluid film stability of the system. However, when the layers are coated concurrently, layers as thin as 2.5 micrometers may be coated and cured so long as the total thickness of all layers is at least about 38 micrometers (1.5 mils). Without wishing to be bound by theory, it is believed that the increased ability to create thin layers results from the contact of the layers with each other prior to their contact with any carrier web. This creates a multi-layer "superlayer" comprising all concurrently coated layers. The fluid film stability is now dependent on the thickness of this "superlayer", rather than the thickness of each individual layer. Thus, for the first time, thin multi-layered photopolymerized pressure-sensitive adhesive tapes can be made effectively and efficiently by the use of concurrent coating techniques.

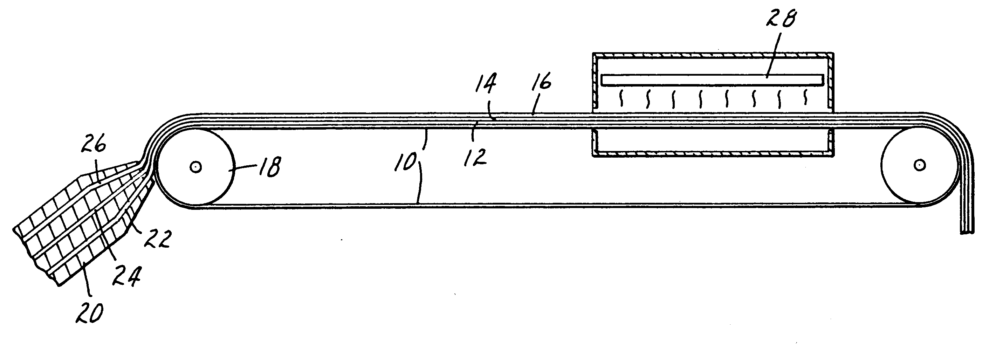

Various means of achieving concurrent coatings are encompassed within the invention including, but not limited to multi-layer curtain coating, co-extrusion coating wherein the dies contain multiple manifolds, and use of multiple extrusion dies. The preferred method involves the use of a co-extrusion die having multiple manifolds, as shown in Figure 1.

A single-coated pressure-sensitive tape of the invention may be made by the process above applying the layers concurrently to a low-adhesion carrier, with one outer layer being a coatable compositions comprising monomers which are photopolymerizable to a pressure-sensitive adhesive state, and one or more contiguous layers being coatable compositions of monomer blends which are photopolymerizable to a non-tacky film state, and being copolymerizable with the pressure-sensitive adhesive outer layer. A double-coated tape may be made by following these steps wherein coatable compositions of both outer layers comprise monomers which are photopolymerizable to a pressure-sensitive adhesive state. The photopolymerizable monomers in the pressure-sensitive adhesive layers may be identical, or may be selected to provide differing specific adhesive properties at each surface of the tape.

A foam-like pressure-sensitive adhesive tape of the invention may be made by a process of the invention comprising the steps of:

1) preparing a coatable composition having ultraviolet-transparent microbubbles dispersed therein which comprises at least one monomer photopolymerizable to a pressure-sensitive adhesive state;

2) preparing one or more coatable compositions which are microbubble-free, and comprises at least one photopolymerizable monomer, the monomer being copolymerizable with the monomer in step 1 when blended and subjected to photopolymerization conditions;

3) concurrently coating the coatable compositions of step 1, and step 2 onto a low-adhesion carrier to form superimposed layers, contiguous layers defining an interface therebetween;

4) permitting migration of photopolymerizable monomers through the interface between the contiguous layers; and

5) subjecting the superimposed layers to irradiation to simultaneously photopolymerize the monomers in each layer, and to provide polymeric chains of copolymers of polymerizable monomers originating from contiguous layers extending through the interface therebetween, thereby to produce a tape having layers which cannot be delaminated. In this process as well as the more general process described above, monomers from each contiguous layer have migrated across the interface, so that after polymerization, a matrix of polymeric chains extends across the interface, substantially comprising monomers from each contiguous layer. It is the formation of such polymeric chains that prevents the layers from being delaminated. Generally, in the preferred foam-like pressure-sensitive adhesive tapes of the invention, the layer containing the microbubbles is thicker than the microbubble-free layer. In making such a foam-like tape of the invention, step 3) of the above-outlined process may involve concurrently applying a thin layer of a microbubble-free coatable composition onto the low-adhesion carrier, a thick coating of the coatable composition containing microbubbles, and a thin coating of a microbubble-free coatable composition. After simultaneously irradiating these coatings, the resulting pressure-sensitive adhesive layer has a thick foam-like core and a thin microbubble-free portion at each of its two surfaces. In this tape, as in all double-coated tapes of the invention, compositions comprising different photopolymerizable monomers may be used in the first and third layers where such would advantageous for the application desired.

The coatable compositions used in tapes of the invention, especially the pressure-sensitive compositions are preferably prepared by premixing together the photopolymerizable monomers and the polar copolymerizable monomer, if used, and photoinitiator. This premix is then partially polymerized to a viscosity in the range of from about 500 cps to about 50,000 cps to achieve a coatable syrup. Alternatively, the monomers can be mixed with a soluble polymeric resin or a thixotropic agent such as fumed silica to achieve a coatable syrup composition.

Photopolymerization is preferably carried out in an inert atmosphere, such as nitrogen. An inert atmosphere can be achieved by temporarily covering the photopolymerizable coating with a plastic film which is transparent to ultraviolet radiation, and irradiating through the film in air. If the photopolymerizable coating is not covered during photopolymerization, the permissible oxygen content of the inert atmosphere can be increased by mixing the coating with a combustible tin compound as taught in U.S. 4,303,485 (Levens), which also teaches such technique for making thick coatings in air.

## Brief Description of the Drawings

Figure 1 schematically illustrates the manufacture of a preferred pressure-sensitive adhesive tape of the invention.

As shown in Figure 1, die-coated coatings 12, 14, and 16, each being a syrup comprising a monomer blend which is photopolymerizable, 12 and 16 being photopolymerizable to a pressure-sensitive adhesive state, 14 being polymerizable to a non-tacky polymeric state are concurrently coated onto ultraviolet-transparent, low-adhesion carrier 10 is concurrently coated by means of a multiple manifold co-extrusion die, 20. The co-extrusion die, 20 is adjacent to the back-up roller, 18. It has three manifolds, 22, 24, and 26 which extrude the photopolymerizable layers 12, 14, and 16 respectively onto the low-adhesion carrier 10. The layers are simultaneously subjected to ultraviolet radiation from a bank of lamps 28, thus photopolymerizing the monomers to provide a layer of pressure-sensitive adhesive which comprises a matrix of polymeric chains that extend across the interfaces between a core and the two surface layers resulting from the polymerization of the coatings 12, 14 and 16.

The carrier 10, instead of being low-adhesion, can have an adhesion-promoting treatment, if necessary, in order to create a permanent bond between the pressure-sensitive adhesive layer and the carrier. A permanently bonded carrier can be selected to provide a tape affording good abrasion resistance and/or corrosion resistance and/or environmental protection. A permanently bonded carrier can be a hot-melt adhesive by which the pressure-sensitive adhesive layer can be bonded to a substrate such as gasketing

7

rubber.

90° Peel Adhesion

The adhesive layer to be tested is transferred to a chemically primed, 50 micrometer aluminum foil backing which then is slit to a width of 2.54 cm (1 inch). The resulting tape is self-adhered to a smooth stainless steel plate under the weight of a 2.04-kg hard-rubber-covered steel roller, 2 passes in each direction. After exposure to the indicated conditions, "90° Peel Adhesion" is measured by moving the free end of the tape away from the steel plate at 90° and at a rate of about 0.5 cm per second (using a tensile tester).

Static Shear Test

This test employs two 25.4-mm wide stainless steel straps as follows: Type 304-2BA, 0.38 mm in thickness, surface roughness 0.05 micrometer arithmetic average deviation from the main line. The strips are washed with heptane (also with MEK if heavy oils are present). A strip of 25.4-mm wide double-coated pressure-sensitive adhesive tape, carried on a low-adhesion liner, is adhered to one end of one of the straps and trimmed to a length of 25.4-mm. The liner is then removed, and the other strap adhered to the exposed adhesive surface. The specimen is placed in a horizontal position and rolled down with a 1-kg weight and rested on the assembly for 15 minutes at room temperature. Then the panel with the adhered tape is placed in an air-circulating oven which has been preheated to the indicated temperature, and after 15 minutes, a weight is hung from the free end of the tape, with the top strap vertical. The time at which the weight falls is the "Static Shear Value". If no failure, the test is discontinued at 10,000 minutes (in the 70°C test) or sometimes at 1440 minutes (in the 121°C test). Only cohesive failures are reported.

Delamination Test

A specimen of the tape is immersed in a bath of ethyl acetate at ordinary room temperature, then visually examined periodically. Any visual evidence of delamination is reported as a failure. The test is discontinued if there has been no failure after 24 hours.

In the following examples, parts are given by weight. The glass microbubbles used in the examples had a density of 0.15 g/cm$^3$ and were 20-150 micrometers in diameter (average 55 micrometers).

Tensile Strength/Elongation

A 5 cm long by 2.5 cm wide strip of the tape is placed between two jaws of an Instron at 21°C (70°F) and 50% relative humidity. The jaws are separated at a constant speed of 13 cm/min. The elongation is reported as the percent elongation required for the sample to break. The tensile strength is measures as the actual force on the sample immediately at break. The force is converted to pounds per square inch units by dividing by the initial cross-sectional area of the sample. When the sample consists of a double-coated tape with a nonpressure-sensitive backing, the cross-sectional area of the nonpressure-sensitive backing is used to compute the tensile strength.

Examples 1 and 2

Two syrups were prepared from 90 parts of isooctyl acrylate and 10 parts of acrylic acid. The first syrup (Syrup #1) was modified with 0.04 phr (phr - parts per hundred resin) of 2,2- dimethoxy-2-phenyl acetophenone photoinitiator, Irgacure™ 651, and was partially polymerized by ultraviolet radiation to a viscosity of approximately 3300 cps (Brookfield), and a degree of polymerization of about 8%. The polymer had an inherent viscosity of about 4.0. An additional 0.15 phr of Irgacure™ 651 was added. 0.10 phr of a 4-(p-methoxyphenyl)-2,6-bis trichloromethyl s-triazine crosslinking agent was also added.

The second syrup (syrup #2) comprised 90 parts isooctyl acrylate and 10 parts of acrylic acid along with 65 phr of n-butyl/methyl methacrylate copolymer, Acryloid B-66™ from The Rohm and Haas Company, 2 phr of trimethylopropane ethoxylate triacrylate (Oxychem™ Photomer 4149™), and 0.25 phr of the triazine crosslinking agent described above. An ultraviolet photopolymerized coating of this syrup will yield a non-tacky polymeric material, useful as a nonpressure-sensitive backing.

Two double coated tapes were prepared by casting three layers of syrup against a low-adhesion carrier followed by irradiation with 350 mJ/cm$^2$ (Dynachem Radiometer™ Model 500) UV energy from a bank of lamps, 90% of the emissions of which were between 300 and 400 nm with a maximum at 351 nm. Coating was done using a three manifold co-extrusion die such that the three layers were concurrently coated. The thickness of the layers were as follows:

|  | Example 1 | Example 2 |
|---|---|---|
| Layer 1 | 50 $\mu$m-Syrup #1 | 50 $\mu$m-Syrup #1 |
| Layer 2 | 50 $\mu$m-Syrup #2 | 178 $\mu$m-Syrup #2 |
| Layer 3 | 50 $\mu$m-Syrup #1 | 50 $\mu$m-Syrup #1 |

Comparative Examples 1 and 2

Double-coated tapes were made in an identical manner to Examples 1 and 2, except that coating was sequentially accomplished using three consecutive knife coaters. These tapes along with the tapes of Examples1 and 2 were tested, and the results reported in Table 1.

### Table 1

|  | Ex. 1 | Comp. Ex. 1 | Ex. 2 | Comp. Ex. 2 |
|---|---|---|---|---|
| Tensile Strength (N/dm): | 986 | 147 | 924 | 199 |
| Elongation (%) | 283 | 464 | 210 | 311 |
| 90° Adhesion (N/dm): |  |  |  |  |
| 15 min @23°C/50% R.H. | 28 | 63 |  |  |
| 72 hr. @23°C/50% R.H. | 123 | 127 |  |  |
| 72 hr. @70°C | 186 | 182 |  |  |
| Delamination Test (minutes) | Passed | Passed | Passed | Passed |

Comparative Examples 3-6

Double-coated pressure-sensitive adhesive tapes were made as described in Example 1, and coated to the constructions described above. It was observed during coating of Example 6, that the microbubbles from syrup 3# were clearly seen in the "rolling bank" of syrup #1 in the next sequential knife coater, thus indicating physical mixing of the layers.

Examples 3-6

Syrup #3 is prepared by adding 0.5 phr of polymeric microbubbles (Miralite™-177) to syrup #2. Examples 3-6 are coated as described in Example 1. The layers have the following thicknesses:

Table 1.1

| Layer | Syrup # | Example 3 | Example 4 | Example 5 | Example 6 |
|---|---|---|---|---|---|
| 1 | 1 | 50$\mu$m | 50$\mu$m | 75$\mu$m | 75$\mu$m |
| 2 | 3 | 300$\mu$m | 400$\mu$m | 550$\mu$m | 750$\mu$m |
| 3 | 1 | 50$\mu$m | 50$\mu$m | 50$\mu$m | 75$\mu$m |

Example 7 and Comparative Example 7

Syrup #4 was prepared in a manner similar to syrup #1 except that the monomers consisted of 80 parts of isooctyl acrylate and 20 parts of N-vinyl-2-pyrrolidone. The levels of photoinitiator and photoactive crosslinker remain the same as in Syrup #1.

Two two-layer pressure-sensitive adhesive tapes were made as in Example 1, except that they were irradiated with 200 mJ/cm$^2$ UV energy. Both tapes had the following construction, and were coated using a multiple manifold co-extrusion die for Example 7, and sequential notched bar coating for Comparative Example 7 respectively:

| Layers | Thickness |
|--------|-----------|
| Layer 1 | 75 μm-syrup #1 |
| Layer 2 | 50 μm-syrup #4 |

Layer 2 was the layer against the low-adhesion carrier. The test results are shown in Table 3.

## Table 3

|  | Ex. 7 | Comp. Ex. 7 |
|--|-------|-------------|
| **90° Peel Adhesion (N/dm):** | | |
| 15 min @23°C/50% R.H. | 77 | 83 |
| 72 hr. @23°C/50% R.H. | 151 | 164 |
| 72 hr. @70°C | 245 | 50 |
| **Shear Strength (min.)−70°C** | 3227 | 49 |
| 23°C | 10000 | 5366 |
| **Delamination Test (minutes)** | **Passed** | **Passed** |

Examples 8-12

Syrup #5 was prepared using a partially polymerized mixture of 75 parts of isooctyl acrylate and 25 parts of acrylic acid. The syrup contained 0.16 phr Irgacure™ 651 and 0.08 phr of the triazine crosslinker described in Example 1.

Five double-coated pressure-sensitive adhesive tapes were made. In each case, three tape layers were superimposed in the following order; syrup #1, syrup #5, and syrup #1 respectively. In each case, the total thickness of all three layers was 178 μm, and the two layers of syrup #1 were the same thickness as described below. All samples were irradiated with 400 mJ/cm$^2$ of UV energy.

| Example No. | Syrup #1 | Syrup #5 |
|-------------|----------|----------|
| 8 | 13 μm | 150 μm |
| 9 | 25 μm | 128 μm |
| 10 | 38 μm | 102 μm |
| 11 | 50 μm | 78 μm |
| 12 | 64 μm | 50 μm |

Comparative Example 11

A double-coated pressure-sensitive adhesive tape was produced as in Example 11 using three sequential notched bar coatings. The construction was as follows:

| Layer 1 | 40 μm-syrup #1 |
|---|---|
| Layer 2 | 75 μm-syrup #5 |
| Layer 3 | 48 μm-syrup #1 |

The tapes were tested for 90° Peel Adhesion and the tapes of Examples 8-12 were tested for Delamination. The test results are reported in Table 4.

Table 4

| 90° Peel Adhesion (N/dm) | | | | |
|---|---|---|---|---|
| | 15 min. 23°C | 72 hr. 23°C | 72 hr. 70°C | Delamination Test |
| Example 8 | 22 | 26 | 22 | Passed |
| Example 9 | 28 | 48 | 28 | Passed |
| Example 10 | 79 | 66 | 77 | Passed |
| Example 11 | 74 | 147 | 193 | Passed |
| Example 12 | 92 | 223 | 256 | Passed |
| Comp. Example 11 | 35 | 70 | 206 | -- |

Examples 12-15

Syrup #6 was prepared using a partially polymerized mixture consisting of 96 parts isooctyl acrylate and 4 parts acrylic acid, along with 0.19 phr Irgacure™ 651 and 0.10 phr of the triazine crosslinker described in Example 1.

Four pressure-sensitive adhesive tapes were then made with one surface being made nonpressure-sensitive by coating a layer of syrup #6 against a low-adhesion carrier and concurrently coating a 90 μm (3.5 mils) layer of Syrup #2 over this layer. The layers were irradiated simultaneously with 200 mJ/cm$^2$ of UV energy. The thicknesses of the layers were as follows:

| Example No. | Syrup #6 Layer | Syrup #2 Layer |
|---|---|---|
| Example 12 | 13 μm | 90 μm |
| Example 13 | 25 μm | 90 μm |
| Example 14 | 38 μm | 90 μm |
| Example 15 | 50 μm | 90 μm |

The tapes were tested for 90° Peel Adhesion and Delamination. The results are listed in Table 5.

Table 5

| 90° Peel Adhesion (N/dm): (Stainless Steel) | Ex. 12 | Ex. 13 | Ex. 14 | Ex. 15 |
|---|---|---|---|---|
| 15 min @23°C/50% R.H. | 0 | 4 | 9 | 9 |
| 72 hr. @23°C/50% R.H. | 4 | 11 | 24 | 42 |
| 72 Hr. @70°C | 9 | 31 | 85 | - |
| Delamination Test (minutes) | Passed | Passed | Passed | Passed |

Examples 16-19

Syrup #7 was prepared using a partially polymerized mixture consisting of 93.5 parts isooctyl acrylate and 6.5 parts acrylic acid, along with 0.14 phr Irgacure™ 651 and 0.15 phr of the triazine crosslinker described in Example 1. Three separate syrups were then made by adding the indicated amount of Foral™ 85 tackifying agent to syrup #7.

Three pressure-sensitive adhesive tapes were then made by coating a layer of the tackified syrup #7 against a low-adhesion carrier and concurrently coating a center layer of Syrup #1 over this layer, and an outer layer of tackified syrup #7 over this layer. The thicknesses, and level of tackification of the individual layers are as listed below.

These tapes were then tested for adhesion to varying substrates, static shear and delamination. The results are listed in Table 6.

| Example No. | Syrup #7 | Syrup #1 | Syrup #7 | Floral™ 85 |
|---|---|---|---|---|
| 16 | 10 $\mu$m | 105 $\mu$m | 10 $\mu$m | 46.8 phr |
| 17 | 3.75 $\mu$m | 117.5 $\mu$m | 3.75 $\mu$m | 30 phr |
| 18 | 12.5 $\mu$m | 100 $\mu$m | 12.5 $\mu$m | 20 phr |

### Table 6

| | Ex. 16 | Ex. 17 | Ex. 18 |
|---|---|---|---|
| *90° Peel Adhesion (N/dm): | | | |
| Stainless Steel | | | |
| 15 min @23°C/50% R.H. | 154 | 158 | -- |
| 72 hr. @23°C/50% R.H. | 189 | 189 | -- |
| 72 Hr. @70°C | 279 | 270 | -- |
| ABS | | | |
| 15 min @23°C/50% R.H. | 121 | 147 | -- |
| 72 hr. @23°C/50% R.H. | 121 | 158 | -- |
| 72 Hr. @70°C | 134 | 140 | -- |
| Polypropylene | | | |
| 15 min @23°C/50% R.H. | 101 | 68 | -- |
| 72 hr. @23°C/50% R.H. | 86 | 66 | -- |
| 72 Hr. @70°C | 86 | 66 | -- |
| Static Shear (min.) | 887 | 10000 | 10000 |
| Delamination Test | Passed | Passed | Passed |

* These 90° Peel Adhesion tests were conducted using a 200 micrometer (8 mil) aluminum backing rather than the standard 50 micrometer (2 mil) backing.

## Claims

1. A pressure-sensitive adhesive tape comprising a plurality of concurrently-coated simultaneously photopolymerized superimposed layers, said layers having been simultaneously photopolymerized, at least one outer layer being a pressure-sensitive adhesive layer, said pressure-sensitive adhesive layer comprising at least one alkyl acrylate ester of a nontertiary alcohol, and a photoinitiator, contiguous layers defining an interface therebetween, each of said contiguous layers comprising a differing photopolymerized matrix of polymeric chains; said polymeric chains extending from the matrix of one of said layers through said interface into the matrix of a contiguous layer; said polymeric chains comprising polymerized monomers having migrated from the matrix of each contiguous layers, whereby said layers cannot be delaminated.

2. A pressure-sensitive adhesive tape according to claim 1 wherein the pressure-sensitive adhesive layer further comprises at least one polar copolymerizable monomer.

**3.** A pressure-sensitive adhesive tape according to claim 2 wherein said adhesive copolymer comprises
(a) from about 40% to about 95% isooctyl acrylate; and
(b) from about 5% to about 60% of a polar copolymerizable monomer selected from the group consisting of N-vinyl pyrrolidone and acrylic acid.

**4.** A pressure-sensitive adhesive tape according to claim 1 wherein an interface is defined between a pressure-sensitive adhesive layer and a layer of substantially non-tacky film.

**5.** A pressure-sensitive adhesive tape according to claim 3 wherein said substantially non-tacky film comprises a photopolymerized polymeric matrix selected from the group consisting of methacrylates, polymers of multifunctional acrylates and copolymers of monomers comprising acrylic acid esters of non-tertiary alkyl alcohol having from 1 to about 14 carbon atoms and at least one polar copolymerizable monomer.

**6.** A pressure-sensitive adhesive tape according to claim 5 wherein said substantially non-tacky film comprises at least one copolymer of monomers comprising
(a) from about 40% to about 90% of acrylic acid ester of non-tertiary alcohol, the molecules of which have from 1 to about 14 carbon atoms; and
(b) from about 10% to about 60% of at least one polar copolymerizable monomer.

**7.** A pressure-sensitive adhesive tape according to claim 1 wherein at least one layer further comprises from about 5% to about 65% volume percent ultraviolet transparent microbubbles having a specific gravity of no more than 1.0.

**8.** A pressure-sensitive adhesive tape according to claim 1 wherein the polar copolymerizable monomer (b) in one pressure-sensitive adhesive layer is acrylic acid, and the polar copolymerizable monomer (b) in a second pressure-sensitive adhesive layer is N-vinyl pyrrolidone.

**9.** A pressure-sensitive adhesive tape according to claim 1 further comprising at least one sequentially coated layer.

**10.** A presssure-sensitive adhesive according to claim 1 having a total thickness of at least 38 micrometers wherein at least one of the layers has a thickness of less than 38 micrometers.

**11.** A process for making the pressure-sensitive adhesive tape of claim 1, said process comprising the steps of:
(1) preparing a plurality of coatable compositions, each of said coatable compositions comprising at least one photopolymerizable monomer; at least one of said coatable compositions being curable to a pressure-sensitive adhesive state, monomers of each of said coatable compositions being copolymerizable when blended and subjected to photopolymerization conditions;
(2) concurrently coating said coatable compositions to provide a plurality of superimposed layers with contiguous layers defining an interface therebetween, with one composition which is curable to a pressuresensitive adhesive state being coated as a first or last layer;
(3) permitting migration of photopolymerizable monomers through said interface between contiguous layers; and
(4) subjecting said superimposed layers to irradiation to simultaneously photopolymerize said monomers in each layer, and to provide polymeric chains comprised of copolymers of photopolymerizable monomers originating from contiguous layers extending through said interface therebetween;
thereby to produce a tape having layers which cannot be delaminated.

**12.** A pressure-sensitive adhesive tape according to claim 1 wherein at least one of said layers comprises a tackifier.

**13.** A pressure-sensitive adhesive tape according to claim 12 wherein said tackifier comprises from about 5% to about 50% by weight of said layer, said tackifier being a rosin ester based tackifier.

**14.** A pressure-sensitive adhesive tape according to claim 13 wherein said tackifier is contained in said

13

pressure-sensitive adhesive outer layer.

**Revendications**

1.  Ruban adhésif sensible à la pression, comprenant plusieurs couches superposées, simultanément photopolymérisées et appliquées en même temps, ces couches ayant été photopolymérisées simultanément, au moins une couche extérieur étant une couche adhésive sensible à la pression, cette couche adhésive sensible à la pression comprenant au moins un ester acrylate d'alkyle d'un alcool non tertiaire et un photo-initiateur, les couches contiguës définissant une interface entre elles, chacune de ces couches contiguës comprenant une matrice photopolymérisée différente de chaînes polymériques ; ces chaînes polymériques s'étendant depuis la matrice de l'une des couches susdites a travers l'interface vers et dans la matrice d'une couche contiguë ; ces chaînes polymériques comprenant des monomères polymérisés ayant migré depuis la matrice de chaque couche contiguë, de sorte que ces couches ne peuvent pas être délaminées.

2.  Ruban adhésif sensible à la pression suivant la revendication 1, caractérisé en ce que la couche adhésive sensible à la pression comprend en outre au moins un monomère copolymérisable polaire.

3.  Ruban adhésif sensible à la pression suivant la revendication 2, caractérise en ce que le copolymère adhésif susdit comprend :
    (a) environ 40 à environ 95 % d'acrylate d'isooctyle ; et
    (b) environ 5 à environ 60 % d'un monomère copolymérisable polaire choisi dans le groupe comprenant la N-vinylpyrrolidone et l'acide acrylique.

4.  Ruban acrylique sensible à la pression suivant la revendication 1, caractérisé en ce qu'une interface est formée entre une couche adhésive sensible à la pression et une couche d'un film essentiellement non collant.

5.  Ruban adhésif sensible à la pression suivant la revendication 3, caractérisé en ce que le film essentiellement non collant comprend une matrice polymérique photopolymérisée choisie dans le groupe comprenant les méthacrylates, les polymères d'acrylates multifonctionnels et les copolymères de monomères comprenant des esters d'acide acrylique d'un alcool alkylique non tertiaire de 1 à environ 14 atomes de carbone, et au moins un monomère copolymérisable polaire.

6.  Ruban adhésif sensible à la pression suivant la revendication 5, dans lequel le film essentiellement non collant susdit comprend au moins un copolymère de monomères comportant :
    (a) environ 40 à environ 90 % d'ester d'acide acrylique d'un alcool non tertiaire, dont les molécules comportent de 1 à environ 14 atomes de carbone ; et
    (b) environ 10 % à environ 60 % d'au moins un monomère copolymérisable polaire.

7.  Ruban adhésif sensible à la pression suivant la revendication 1, dans lequel au moins une couche comprend en outre environ 5 à environ 65 % en volume de microbulles transparentes à l'ultraviolet, ayant un poids spécifique non supérieur à 1,0.

8.  Ruban adhésif sensible à la pression suivant la revendication 1, dans lequel le monomère copolymérisable polaire (b) se trouvant dans une couche adhésive sensible à la pression est l'acide acrylique, et le monomère copolymérisable polaire (b) se trouvant dans une seconde couche adhésive sensible à la pression est la N-vinylpyrrolidone.

9.  Ruban adhésif sensible à la pression suivant la revendication 1, comprenant en outre au moins une couche appliquée séquentiellement.

10. Ruban adhésif sensible à la pression suivant la revendication 1, présentant une épaisseur totale d'au moins 38 micromètres, et dans lequel au moins l'une des couches a une épaisseur de moins de 38 micromètres.

11. Procédé de préparation du ruban adhésif sensible à la pression suivant la revendication 1, ce procédé comprenant les phases consistant :

(1) à préparer plusieurs compositions applicables par enrobage, chacune de ces compositions applicables par enrobage comprenant au moins un monomère photopolymérisable ; au moins l'une de ces compositions applicables par enrobage étant durcissable à un état adhésif sensible à la pression, les monomères de chacune de ces compositions applicables par enrobage étant copolymérisables lorsqu'ils sont mélangés et soumis à des conditions de photopolymérisation

(2) à enrober simultanément ces compositions applicables par enrobage pour former plusieurs couches superposées, les couches contiguës définissant une interface entre elles, une composition qui est durcissable à l'état adhésif sensible à la pression étant appliquée à titre de première ou de dernière couche ;

(3) à permettre une migration des monomères photopolymérisables à travers l'interface existant entre les couches contiguës ; et

(4) à soumettre les couches superposées susdites à une irradiation pour photopolymériser simultanément les monomères de chaque couche, et pour former des chaînes polymériques constituées de copolymères de monomères photopolymérisables provenant des couches contiguës et s'étendant à travers l'interface comprise entre ces couches ;

de manière à former ainsi un ruban comportant des couches qui ne peuvent pas être délaminées.

**12.** Ruban adhésif sensible à la pression suivant la revendication 1, dans lequel au moins l'une des couches susdites comprend un agent collant.

**13.** Ruban adhésif sensible à la pression suivant la revendication 12, dans lequel l'agent collant susdit constitue d'environ 5 à environ 50 % en poids de la couche, cet agent collant étant un agent à base d'ester de colophane.

**14.** Ruban adhésif sensible à la pression suivant la revendication 13, dans lequel l'agent collant est contenu dans la couche adhésive extérieure, sensible à la pression.

**Patentansprüche**

**1.** Druckempfindliches Klebeband umfassend eine Vielzahl von parallel aufgetragenen, gleichzeitig photopolymerisierten übereinanderliegenden Schichten, die gleichzeitig photopolymerisiert wurden, wobei mindestens eine äußere Schicht eine druckempfindliche Klebstoffschicht ist, die druckempfindliche Klebstoffschicht wenigstens einen Alkylacrylatster eines nichttertiären Alkohols umfaßt sowie einen Photoinitiator, wobei aneinandergrenzende Schichten zwischen sich eine Grenzfläche bilden und jede der aneinandergrenzenden Schichten eine andere photopolymerisierte Matrix aus Polymerketten umfaßt; wobei die Polymerketten sich von der Matrix einer der Schichten durch die Grenzfläche bis in die Matrix einer angrenzenden Schicht erstrecken; und die Polymerketten enthalten polymerisierte Monomere, die von der Matrix jeder der angrenzenden Schichten hergewandert sind, wodurch die Schichten nicht delaminiert werden können.

**2.** Druckempfindliches Klebeband nach Anspruch 1, dadurch gekennzeichnet, daß die druckempfindliche Klebstoffschicht ferner wenigstens ein polares copolymerisierbares Monomer enthält.

**3.** Druckempfindliches Klebeband nach Anspruch 2, dadurch gekennzeichnet, daß der Copolymerklebstoff enthält:
(a) etwa 40% bis etwa 95% Isooctylacrylat; und
(b) etwa 5% bis etwa 60% eines polaren copolymerisierbaren Monomers, das ausgewählt ist aus der Gruppe umfassend N-Vinylpyrrolidon und Acrylsäure.

**4.** Druckempfindliches Klebeband nach Anspruch 1, dadurch gekennzeichnet, daß die Grenzfläche gebildet wird zwischen einer druckempfindlichen Klebstoffschicht und einer Schicht aus einer im wesentlichen nichtklebrigen Folie.

**5.** Druckempfindliches Klebeband nach Anspruch 3, dadurch gekennzeichnet, daß die im wesentlichen nichtklebrige Folie eine Matrix aus einem photopolymerisierten Polymer enthält, das ausgewählt ist aus der Gruppe umfassend Methacrylate, Polymere von polyfunktionellen Acrylaten und Copolymere von Monomeren, umfassend Acrylsäureester von nichttertiärem Alkylalkohol mit 1 bis etwa 14 Kohlenstoffatomen und mindestens ein polares copolymerisierbares Monomer.

**6.** Druckempfindliches Klebeband nach Anspruch 5, dadurch gekennzeichnet, daß die im wesentlichen nichtklebrige Folie mindestens ein Copolymer von Monomeren enthält, umfassend:

(a) etwa 40% bis etwa 90% Acrylsäureester von nichttertiärem Alkohol, dessen Moleküle 1 bis etwa 14 Kohlenstoffatome besitzen; und

(b) etwa 10% bis etwa 60% von mindestens einem polaren copolymerisierbaren Monomer.

**7.** Druckempfindliches Klebeband nach Anspruch 1, dadurch gekennzeichnet, daß mindestens eine Schicht ferner etwa 5 bis etwa 65 Vol.-% ultraviolette durchsichtige Mikrobläschen enthält mit einem spezifischen Gewicht von nicht mehr als 1,0.

**8.** Druckempfindliches Klebeband nach Anspruch 1, dadurch gekennzeichnet, daß das polare copolymerisierbare Monomer (b) in einer druckempfindlichen Klebstoffschicht Acrylsäure ist, und das polare copolymerisierbare Monomer (b) in einer zweiten druckempfindlichen Klebstoffschicht N-Vinylpyrrolidon ist.

**9.** Druckempfindliches Klebeband nach Anspruch 1, ferner umfassend mindestens eine sequentiell aufgetragene Schicht.

**10.** Druckempfindliches Klebeband nach Anspruch 1 mit einer Gesamtdicke von mindestens 38 Mikrometer, dadurch gekennzeichnet, daß mindestens eine der Schichten eine Dicke von weniger als 38 Mikrometer aufweist.

**11.** Verfahren zur Herstellung des druckempfindlichen Klebebandes nach Anspruch 1, wobei das Verfahren die folgenden Schritte umfaßt:

(1) Herstellen einer Vielzahl von aufbringbaren Zusammensetzungen, wobei jede der aufbringbaren Zusammensetzungen mindestens ein photopolymerisierbares Monomer enthält; wobei mindestens eine der aufbringbaren Zusammensetzungen zu einem druckempfindlichen Klebstoff ausgehärtet werden kann, und die Monomere von jeder der aufbringbaren Zusammensetzungen copolymerisierbar sind, wenn sie vermischt werden und Photopolymerisationsbedingungenunterworfen werden;

(2) Paralleles Auftragen der aufbringbaren Zusammensetzungen zur Herstellung einer Vielzahl von übereinanderliegenden Schichten, wobei aneinandergrenzende Schichten eine Grenzfläche zwischen sich bilden, und eine Zusammensetzung, die zu einem druckempfindlichen Klebstoff ausgehärtet werden kann, als erste oder als letzte Schicht aufgetragen wird;

(3) Veranlassen des Wanderns von photopolymerisierbaren Monomeren durch die Grenzfläche zwischen aneinandergrenzenden Schichten; und

(4) Bestrahlen der übereinanderliegenden Schichten, um die Monomere in jeder Schicht gleichzeitig zu photopolymerisieren, und um Polymerketten zu bilden, die jeweils aus Copolymeren von photopolymerisierbaren Monomeren bestehen, die aus angrenzenden Schichten stammen, und sich durch die Grenzfläche zwischen den Schichten erstrecken;

so daß auf diese Weise ein Band entsteht, dessen Schichten nicht delaminiert werden können.

**12.** Druckempfindliches Klebeband nach Anspruch 1, dadurch gekennzeichnet, daß mindestens eine der Schichten einen Klebrigmacher enthält.

**13.** Druckempfindliches Klebeband nach Anspruch 12, dadurch gekennzeichnet, daR der Klebrigmacher etwa 5 bis etwa 50 Gew.-% der Schicht umfaßt, wobei der Klebrigmacher ein Klebrigmacher auf Harzesterbasis ist.

**14.** Druckempfindliches Klebeband nach Anspruch 13, dadurch gekennzeichnet, daß der Klebrigmacher in der äußeren druckempfindlichen Klebstoffschicht enthalten ist.

16